# EUROPÄISCHE PATENTANMELDUNG

(11) **EP 2 930 419 A1**
(43) Veröffentlichungstag der Anmeldung: **14.10.2015**
(21) Anmeldenummer: 15162716.3
(22) Anmeldetag: 03.04.2014
(51) Int. Cl.: F21V 13/02, F21V 7/00

(54) **BELEUCHTUNGSVORRICHTUNG UND VERFAHREN ZUR ERZEUGUNG EINES BELEUCHTUNGSBEREICHS FÜR EINE 3D-KAMERA**

(30) Priorität: 17.05.2013 DE 102013105105
(62) Teilanmeldung aus: 14163385.9
(71) Anmelder: SICK AG, 79183 Waldkirch (DE)
(72) Erfinder: Pfister, Dr. Thorsten, 79111 Freiburg (DE); Schill, Nikolaus, 79215 Elzach (DE)
(74) Vertreter: Hehl, Ulrich

(57) **Zusammenfassung**

Es wird eine Beleuchtungsvorrichtung (16) für eine 3D-Kamera (10) zur Erzeugung eines Beleuchtungsbereichs (22) mit homogener, jedoch in Randbereichen des Beleuchtungsbereichs (22) überhöhter Intensitätsverteilung angegeben, wobei die Beleuchtungsvorrichtung (16) mindestens eine Lichtquelle (26) mit einer Hauptabstrahl-richtung sowie einen um die Hauptstrahlrichtung (28) umlaufenden seitlichen Reflektor (30) aufweist. Dabei weist der seitliche Reflektor (30) die Form mindestens zweier übereinander angeordneter Hohlkegel- oder Hohlpyramidenstümpfe auf.

## Beschreibung

Die Erfindung betrifft eine Beleuchtungsvorrichtung und ein Verfahren zur Erzeugung eines Beleuchtungsbereichs für eine 3D-Kamera nach dem Oberbegriff von Anspruch 1 beziehungsweise 7.

3D-Kameras erzeugen im Gegensatz zu herkömmlichen zweidimensionalen Kameras auch Distanzinformationen als zusätzliche Dimension der Bilddaten. Dafür sind verschiedene Techniken bekannt. Stereoskopische Kameras nehmen nach dem Vorbild des menschlichen räumlichen Sehens die Szenerie mindestens zweimal aus unterschiedlicher Perspektive auf, ordnen gleiche Strukturelemente in den beiden Bildern einander zu und berechnen die Distanz aus der Disparität und den bekannten Perspektiven. Musterbasierte Verfahren, wie beispielsweise Lichtschnittverfahren, erkennen Entfernungen anhand von Verzerrungen eines eingelernten oder sonst bekannten Beleuchtungsmusters. Lichtlaufzeitkameras bestimmen die Zeit zwischen Aussenden und Empfang eines Lichtsignals, und zwar anders als bei Laserscannern oder Entfernungstastern nicht nur einmal, sondern ortsaufgelöst je Pixelelement des Bildsensors, wie beispielsweise in einem als Photonmischdetektion bekannten Verfahren.

Man kann diese 3D-Verfahren in aktive und passive Verfahren aufteilen, je nachdem, ob die 3D-Kamera eine eigene Beleuchtung aufweist oder sich auf das Umgebungslicht verlässt. Musterbasierte Verfahren sowie Lichtlaufzeitverfahren sind inhärent aktiv, weil die Beleuchtung unverzichtbarer Teil der Distanzbestimmung ist. Stereoverfahren können im Prinzip aktiv und passiv arbeiten. Bei passiver Stereoskopie stellt sich jedoch gerade bei größeren, homogenen und damit strukturlosen Bereichen der Szenerie das Problem, dass keine eindeutigen Zuordnungen von Bildmerkmalen und damit keine zuverlässige Disparitätsschätzung möglich ist.

Ein bekannter Störeffekt bei der Bilderfassung ist der sogenannte Randbereichsabfall. Darunter versteht man eine inhomogene Verteilung der Intensität, die am Rand gegenüber dem Zentrum geringer wird. Aktive 3D-Verfahren leiden gleich zweifach unter einem Randbereichsabfall, denn einerseits empfängt der Bildsensor aufgrund des Randbereichsabfalls seines Objektivs an den Bildrändern weniger Licht, andererseits ist die Szenerie wegen vergleichbarer Inhomogenitäten der Beleuchtung im Randbereich auch noch schlechter ausgeleuchtet.

Im Stand der Technik sind verschiedene Möglichkeiten bekannt, um den Randbereichsabfall auszugleichen. Ein Ansatz besteht darin, den beleuchtenden Laserdioden ein Mikrolinsenfeld nachzuordnen, welches eine gewisse Lichtumverteilung zu den Rändern des Sichtbereichs hin leistet. Dies bedeutet einen verhältnismäßig hohen optischen Aufwand, der das Problem auch nicht vollständig behebt.

In einem anderen herkömmlichen System wird eine Vielzahl von LED-Lichtquellen mit jeweils einer einzelnen Sendelinse ausgestattet. Die so entstehenden einzelnen Beleuchtungsfelder werden durch entsprechende Anordnung der Sendelinsen gegenüber den Lichtquellen auf verschiedene Positionen im Sichtbereich der 3D-Kamera ausgerichtet, wobei durch eine Verschiebung dieser Beleuchtungsfelder aus dem Zentrum des Sichtbereichs heraus eine Intensitätsüberhöhung in den Randbereichen erzielt wird. Dies birgt aber besonders im Zusammenhang mit Lichtlaufzeitverfahren erhebliche Nachteile, weil sich die resultierende Gesamtbeleuchtung für nahezu jedes Pixel als unterschiedliche Überlagerung der einzelnen Lichtquellen ergibt. Bei Lichtlaufzeitverfahren möchte man aber regelmäßig über einen optischen Referenzpfad verfügen, um nicht laufzeitabhängige Driften berücksichtigen zu können. Wenn sich die Lichtzusammensetzung von Pixel zu Pixel ändert, müsste im Prinzip ein optischer Referenzpfad für jeden Pixelbereich oder sogar jedes einzelne Pixel gebildet werden, was technisch extrem mühsam, wenn nicht unmöglich wäre. Ohne solche Referenzpfade dagegen werden systematische Messabweichungen eingeführt, die in der Praxis oft nicht toleriert werden können. Ein weiterer Nachteil des Einsatzes einer Vielzahl von LED-Lichtquellen besteht darin, dass durch Effekte wie Bauteiltoleranzen, Temperaturabhängigkeiten, Rauschen oder gar Ausfälle erhebliche Leistungsschwankungen entstehen können. Dadurch verändert sich lokal die Intensitätsverteilung und erzeugt damit weitere Messfehler.

Bekannt ist weiterhin, die Lichtquelle mit seitlichen Reflektoren zu versehen, um im äußeren Teil des Beleuchtungsfeldes eine Ablenkung zum Zentrum hin zu erreichen. Andere Systeme verwenden nur den inneren Bereich des Abstrahlprofils, in dem die Intensität näherungsweise konstant ist. Mit beiden Maßnahmen lässt sich aber bestenfalls eine homogene Lichtverteilung und keine Randbereichsüberhöhung erzielen.

Für stereoskopische Kamerasysteme, wie beispielsweise in der US 2007/0263903 A1, werden in der Beleuchtungseinheit auch diffraktive optische Elemente eingesetzt. Diese dienen aber primär dazu, ein strukturiertes Beleuchtungsmuster zu erzeugen, und nicht dazu, durch Ausgleich des Randbereichsabfalls für eine effektiv homogene Intensitätsverteilung zu sorgen. Allerdings wird auch der Gedanke, zusätzlich den Randbereichsabfall zu kompensieren, beispielsweise in der DE 20 2008 013 217 U1 geäußert.

Für zweidimensionale Kameras ist beispielsweise aus der DE 102 04 939 A1 bekannt, eine Fresnellinse für eine homogene Ausleuchtung zu nutzen. Kamera-Beleuchtungseinheiten können nach DE 10 2006 023 142 A1 auch optische Elementen in Mikroform, Fresnelform oder Ausführungen als diffraktive Elemente aufweisen. Damit sind aber weiterhin keine einfachen optischen Mittel genannt, welche das Problem des Randbereichsabfalls ausreichend kompensieren.

Es ist daher Aufgabe der Erfindung, die Beleuchtung für eine 3D-Kamera zu verbessern.

Diese Aufgabe wird durch eine Beleuchtungsvorrichtung und ein Verfahren zur Erzeugung eines Beleuchtungsbereichs für eine 3D-Kamera nach Anspruch 1 beziehungsweise 7 gelöst. Dabei geht die Erfindung von dem Grundgedanken aus, Licht innerhalb des Beleuchtungsbereichs umzuverteilen, um eine homogene Intensitätsverteilung mit einer gezielten Intensitätsüberhöhung im Randbereich zu erreichen. Die Beleuchtung zeigt also keine flache Intensitätsverteilung, sondern ist effektiv homogen in dem Sinne, dass der Randabfall der Beleuchtung und möglichst auch der Randabfall eines Empfangsobjektivs einer 3D-Kamera durch entsprechende Intensitätsüberhöhung kompensiert wird. Um eine solche Intensitätsverteilung zu erzeugen, wird eine Kombination aus einem umlaufenden seitlichen Reflektor und einem in Hauptabstrahlrichtung zentral angeordneten Mittenreflektor eingesetzt. Die Hauptabstrahlrichtung entspricht vorzugsweise der optischen Achse der Lichtquelle und bildet eine Symmetrieachse der Beleuchtungsvorrichtung. Formgebung und Anordnung der beiden Reflektoren ist derart, dass Licht aus dem Zentrum zu den Rändern umverteilt wird. Dabei bleibt auch das Zentrum nicht unbeleuchtet, weil der seitliche Reflektor die nicht von dem Mittenreflektor stammenden Lichtanteile in Richtung auf das Zentrum hin umverteilt und damit auch Licht in den zentralen, von dem Mittenreflektor auf dem direkten Weg abgeschatteten Beleuchtungsbereich lenkt.

Die Erfindung hat den Vorteil, dass zumindest ein Randabfall der Intensität der Beleuchtungsvorrichtung und vorzugsweise zugleich ein zweiter Randabfall der von einer 3D-Kamera empfangenen Intensität durch Randabfall von deren Empfangsobjektiv ausgeglichen wird. Dies führt zu einer konstanten geometrischen Objektauflösung im gesamten Messfeld unabhängig von der lateralen Objektposition, wobei insbesondere Objekte am Rand des Sichtfeldes besser erkannt und lokalisiert werden. Dabei können gerade für Lichtlaufzeitverfahren störende Mehrwegpfade durch entsprechende Formgebung und Anordnung der beiden Reflektoren vermieden werden. Die erfindungsgemäße Beleuchtung ist sehr energieeffizient, denn das Sendelicht wird durch Umverteilung in einem hohen Grade von 80% und mehr innerhalb des gewünschten Beleuchtungsbereichs ausgenutzt. Dabei beansprucht die Beleuchtungsvorrichtung wenig Bauraum und ermöglicht so kleine und flache Bauformen, während die wenigen erforderlichen Komponenten kostengünstig hergestellt werden können. Die Reflektoren sorgen zudem für eine gute thermische Anbindung der Lichtquelle und damit eine hohe Lebensdauer.

Der seitliche Reflektor weist bevorzugt die Form eines Hohlkegels auf oder einer Hohlpyramide. Die Achse diese Hohlkegels stimmt vorzugsweise mit der Hauptabstrahlrichtung und damit der optischen Achse der Lichtquelle überein, um eine symmetrische Anordnung zu erhalten. Der Hohlkegel sorgt durch innere Verspiegelung für die gewünschte Reflexion. Die Mantelfläche des Hohlkegels schließt sich vorzugsweise direkt an die Lichtquelle an, um eine einfache konstruktive und thermische Anbindung sowie einen optischen Abschluss zu gewährleisten. Weitere Alternativen der Form des seitlichen Reflektors sind denkbar, beispielsweise ein Ausschnitt aus einem Paraboloid, einem Ellipsoid oder auch eine Freiformfläche.

Der seitliche Reflektor weist bevorzugt die Form mindestens zweier übereinander angeordneter Hohlkegel- oder Hohlpyramidenstümpfe auf. Dabei sind die Winkel der jeweiligen Stümpfe unterschiedlich, so dass ein treppenartiger Verlauf entsteht. Derartige gestapelte oder verschachtelte Hohlstümpfe erlauben durch die Winkel eine Anpassung an die Strahlcharakteristik derart, dass das Beleuchtungsfeld die gewünschte Homogenität und Randabfallkompensation aufweist.

Der Mittenreflektor weist bevorzugt eine in einer Spitze zulaufende Form auf. Diese Spitze zeigt bevorzugt in Richtung der Lichtquelle, während der Mittenreflektor mit einer zentralen Achse, die in der Spitze mündet, auf der optischen Achse der Lichtquelle angeordnet ist. Durch äußere Spiegelflächen weist dann der Mittenreflektor die gewünschten Reflexionseigenschaften auf.

Der Mittenreflektor weist bevorzugt eine rotationssymmetrische Form auf. Dies entspricht einer rotationssymmetrischen Abstrahlcharakteristik der Lichtquelle beziehungsweise einem homogenen Beleuchtungsbereich in beiden lateralen Richtungen. Wenn die Abstrahlcharakteristik bekannte Abweichungen zeigt oder ein asymmetrischer Beleuchtungsbereich gewünscht ist, kann alternativ eine nicht rotationssymmetrische Form des Mittenreflektors gewählt werden.

Der Mittenreflektor weist bevorzugt die Form eines Keils oder eines Kegels auf. Dabei wirkt ein Keil nur in einer lateralen Achse, ein Kegel dagegen in beiden lateralen Achsen. In einem entsprechenden Schnitt bietet eine solche Geometrie jeweils eine schräge Spiegelkontur an, welche im Zusammenspiel mit dem seitlichen Reflektor die gewünschte Umverteilung erzeugt. Alternative Geometrien durch einen parabolischen Mittenreflektor oder eine Freiformfläche sorgen für gezielte Abweichungen. Denkbar ist auch eine alternative Ausführung als Steg oder Kreuzsteg.

In dem Strahlengang der Lichtquelle ist bevorzugt dem seitlichen Reflektor und dem Mittenreflektor nachgeordnet ein optisches Element zur zusätzlichen Lichtumverteilung vorgesehen. Dieses optische Element wirkt in Ergänzung zu den beiden Reflektoren, um zu einer angestrebten Beleuchtungsverteilung zu gelangen.

Das optische Element weist bevorzugt ein diffraktives optisches Element oder eine Fresnellinse auf. Ein diffraktives optisches Element ist an sich empfindlich gegenüber der Bandbreite und Divergenz der Lichtquelle, was aber für eine homogene Beleuchtung keine große Rolle spielt. Ein anderes bekanntes Problem stellt die nullte Beugungsordnung dar, in der insbesondere aus Gesichtspunkten des Augenschutzes zu viel Licht transmittiert wird. Dieser Effekt wird durch den Mittenreflektor weitgehend ausgeschaltet. Eine beispielhaft genannte Alternative zu einem diffraktiven optischen Element ist eine Fresnellinse.

Das optische Element ist bevorzugt in eine Frontscheibe der Beleuchtungsvorrichtung oder der 3D-Kamera integriert. Damit erfüllt die Frontscheibe eine Doppelfunktion, wodurch Bauraum und Herstellkosten eingespart werden.

Die Lichtquelle weist bevorzugt eine LED oder ein LED-Array auf. Auch eine Laserbeleuchtung wäre denkbar, insbesondere in Form eines VCSEL-Arrays, ist aber anders als bei vielen herkömmlichen Lösungen, die ein strukturiertes Beleuchtungsmuster hoher Intensität anstreben, nicht zwingend erforderlich. Mehrere LEDs sorgen für eine höhere optische Ausgangsleistung. Dabei sollte eine gleichförmige Beleuchtung der Szenerie durch die LEDs gewährleistet werden. Dann werden Leistungsschwankungen durch diverse Driften wie Temperatur-, Alterungs- oder Rauscheffekte sowie einzelne Ausfälle ausgemittelt beziehungsweise alle Pixel der 3D-Kamera davon gleichermaßen betroffen, so dass keine systematischen Messfehler eingeführt werden. Solche Leistungsschwankungen haben dann also keinen so großen Einfluss auf das Gesamtsystem und führen nicht zu Teilausfällen in bestimmten Bildbereichen. Zugleich entfällt das Erfordernis einer Vielzahl optischer Referenzpfade für die Lichtlaufzeitmessung für einzelne Pixel.

In vorteilhafter Weiterbildung ist eine 3D-Kamera mit mindestens einer erfindungsgemäßen Beleuchtungsvorrichtung vorgesehen. Diese 3D-Kamera kann auf einem beliebigen 3D-Verfahren beruhen, ist aber bevorzugt als 3D-Kamera nach dem Lichtlaufzeitprinzip ausgebildet und weist dazu einen Bildsensor mit einer Vielzahl von Pixelelementen sowie eine Auswertungseinheit auf, um für jedes Pixelelement eine Lichtlaufzeit zwischen Aussenden und Empfang von Licht der Beleuchtungsvorrichtung zu bestimmen. Die Auswertungseinheit kann zumindest teilweise in den Bildsensor integriert werden, so dass also intelligente Pixel entstehen, die zumindest Teile der Lichtlaufzeitbestimmung selbst vornehmen. Ein derartiges Verfahren ist als Photonmischdetektion (PMD) bekannt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine einfache Blockdarstellung von einer 3D-Kamera und deren Beleuchtungsvorrichtung;
- Fig. 2: eine dreidimensionale Darstellung des Sichtbereichs der 3D-Kamera;
- Fig. 3: ein Vergleich einer herkömmlichen Intensitätsverteilung in Abhängigkeit vom lateralen Ort mit Randabfall und einer erfindungsgemäßen Intensitätsverteilung mit Randbereichsüberhöhung;
- Fig. 4: eine vereinfachte Darstellung einer Ausführungsform einer Beleuchtungsvorrichtung mit seitlichem Reflektor und Mittenreflektor;
- Fig. 5: eine vereinfachte Darstellung einer Ausführungsform einer Beleuchtungsvorrichtung mit Spiegelelement; und
- Fig. 6a-b: eine Seitenansicht beziehungsweise Draufsicht auf eine weitere Ausführungsform eines seitlichen Reflektors mit gestapelten oder verschachtelten Pyramidenstümpfen.

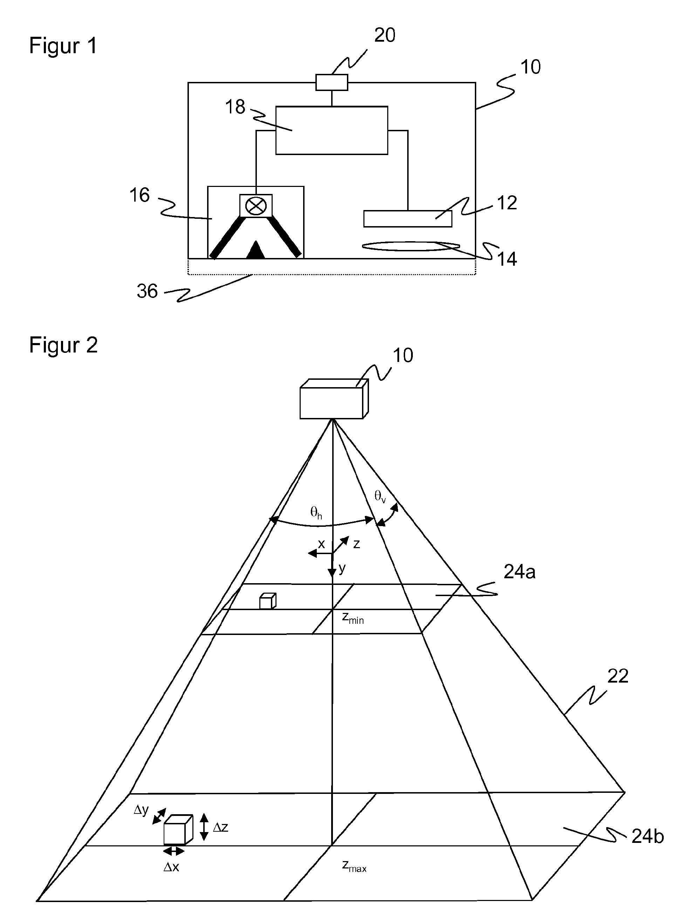

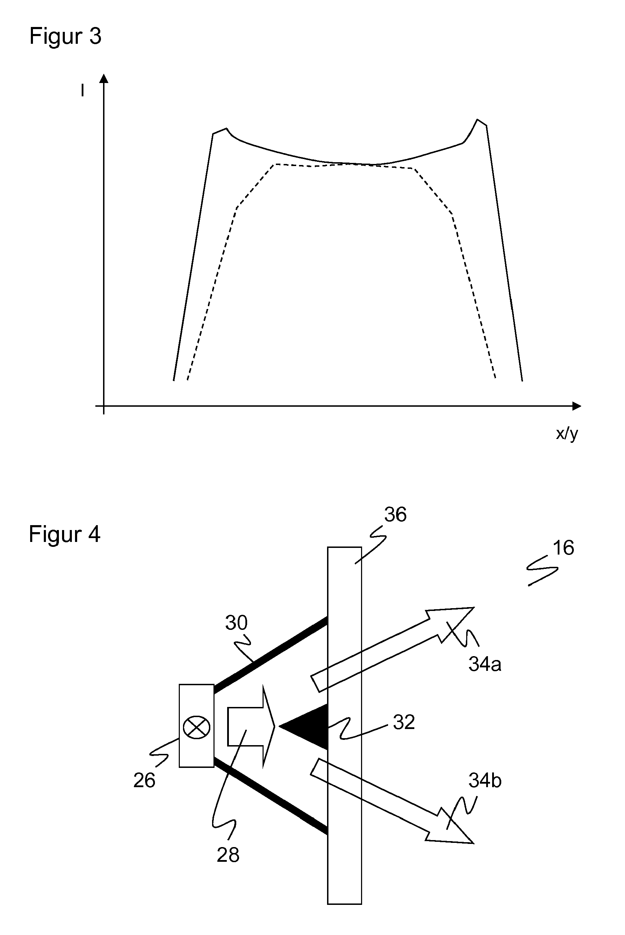

Figur 1 zeigt eine einfache Blockdarstellung einer 3D-Kamera 10 mit einem Bildsensor 12, der eine Vielzahl von lichtempfindlichen Pixelelementen aufweist und dem ein vereinfachend als einzelne Linse dargestelltes Empfangsobjektiv 14 vorgeordnet ist. Die 3D-Kamera 10 umfasst weiterhin eine Beleuchtungsvorrichtung 16, deren Elemente und Funktionsprinzip erst weiter unten im Zusammenhang mit Figur 4 näher erläutert werden. Die optische Anordnung von Bildsensor 12 und Beleuchtungsvorrichtung 16 ist nur beispielhaft zu verstehen, der gezeigte gegenseitige Abstand sollte gegenüber der auszunehmenden Szenerie keine Rolle spielen. Alternative Ausführungsformen mit Teilerspiegel oder sonstiger koaxialer Anordnung sind denkbar. Auch eignet sich die anhand einer 3D-Kamera 10 beschriebene Beleuchtungsvorrichtung 16 prinzipiell für andere Sensoren, beispielsweise 2D-Kameras.

Eine Steuer- und Auswertungseinheit 18 ist mit dem Bildsensor 12 und der Beleuchtungsvorrichtung 16 verbunden, um pixelaufgelöste Bilddaten des Bildsensors 12 auszulesen und einschließlich einer Distanzbestimmung beispielsweise durch Bestimmung einer Lichtlaufzeit auszuwerten, beziehungsweise um eine Szenerie über die Beleuchtungsvorrichtung 16 in einer gewünschten Weise auszuleuchten, beispielsweise mit Beleuchtungspulsen oder amplitudenmoduliertem Licht. Über eine Schnittstelle 20 werden Bilddaten in verschiedenen Verarbeitungszuständen ausgegeben, oder die 3D-Kamera 10 wird in der anderen Richtung über die Schnittstelle 20 oder eine weitere Schnittstelle parametriert. Die Auswertung kann zumindest teilweise bereits in den Pixeln des Bildsensors 12 oder umgekehrt auch außerhalb der 3D-Kamera 10 erfolgen, die dann lediglich entsprechende Rohdaten an der Schnittstelle 20 bereitstellt.

Die 3D-Kamera 10 arbeitet vorzugsweise mit einem Lichtlaufzeitverfahren, das aber an sich bekannt ist und deshalb nicht in weiteren Details erklärt. Alternativ kann die 3D-Kamera 10 auch ein anderes 3D-Verfahren wie Stereoskopie einsetzen, wobei dann unter Umständen in die Beleuchtungsvorrichtung ein zusätzliches Musterelement eingesetzt wird, um statt einer homogenen Ausleuchtung ein strukturiertes Beleuchtungsmuster zu erhalten. Der erfindungsgemäß kompensierte Randabfalleffekt betrifft derartige Beleuchtungsmuster in ganz ähnlicher Weise.

Figur 2 zeigt eine schematische dreidimensionale Darstellung der 3D-Kamera 10 mit deren Sichtbereich 22. Bei einer aktiven Bilderfassung liegt der Sichtbereich 22 vorzugsweise innerhalb eines Beleuchtungsbereichs der Beleuchtungsvorrichtung 16 beziehungsweise stimmt im Idealfall damit überein. Die 3D-Kamera 10 soll eine geometrische Objektauflösung Δx, Δy, Δz besitzen, die nur von dem Abstand z zu der 3D-Kamera 10 abhängt. Innerhalb einer Abstandsebene 24a mit festem Abstand z zwischen einem Mindestabstand zₘᵢₙ und einer Reichweite zₘₐₓ soll also die Objektauflösung Δx, Δy, Δz unabhängig von der Position x, y innerhalb der Abstandsebene 24a-b bleiben.

Für die laterale Auflösung Δx, Δy ist dies in der Regel gegeben, da diese von Messprinzip, Auswertungsalgorithmus sowie den meist für alle Pixel des Bildsensors 12 gleichen Eigenschaften und Abmessungen abhängt. Die Distanzauflösung oder axiale Auflösung Δz dagegen zeigt eine Abhängigkeit von der detektierten Lichtleistung beziehungsweise Signalleistung. Die Signalleistung wiederum hängt aber von der lateralen Position x, y ab. Denn zum einen fällt die Beleuchtungsintensität einer Halbleiterlichtquelle der Beleuchtungsvorrichtung 16 von einem Intensitätsmaximum in der Mitte, also längs der optischen Achse, lateral ab. Zum zweiten würde selbst noch bei völlig homogener Beleuchtung ein Randlichtabfall des Empfangsobjektivs 14 verbleiben, der zu einer Verringerung der detektierten Lichtleistung in Randpixeln des Bildsensors 12 führt. Ohne zusätzliche Maßnahmen ergibt sich daher eine systematisch erhöhte Messunsicherheit in den Randbereichen und vor allem den Ecken des Bildsensors 12 beziehungsweise des Sichtfeldes 22.

Figur 3 zeigt einen Vergleich einer mit gestrichelter Linie dargestellten lateralen Intensitätsverteilung mit dem zu kompensierenden Randabfall und einer mit durchgezogener Linie dargestellten lateralen Intensitätsverteilung mit Randbereichsüberhöhung zu deren Kompensation. Es wird dazu erfindungsgemäß Beleuchtungsenergie in den Randbereich umverteilt. Wie in Figur 3 zu erkennen, wird vorzugsweise nicht nur der Randbereichsabfall zu einer konstanten Intensitätsverteilung ausgeglichen. Vielmehr wird darüber hinaus die Beleuchtungsintensität im Randbereich sogar geeignet überhöht, um auch einen Randbereichsabfall des Empfangsobjektivs 14 auszugleichen.

Genaugenommen sind allein für die Kompensation von lateralen Ortsabhängigkeiten des Empfangsobjektivs 14 schon mindestens zwei Effekte zu berücksichtigen. Ein erster Effekt ist der nun mehrfach angesprochene Randbereichsabfall, der dafür sorgt, dass die Intensität mit einem ersten Faktor k₁ mit dem Abstand zum Zentrum abnimmt. Ein zweiter, üblicherweise kleinerer Effekt wird durch die Verzeichnung des Empfangsobjektivs 14 eingeführt, aufgrund derer die effektive Fläche in der Objektebene, die auf jedes Pixel des Bildsensors abgebildet wird, mit dem Abstand zum Zentrum um einen zweiten Faktor k₂ zunimmt. Dies resultiert effektiv in einer gewissen Intensitätserhöhung zum Rand hin, die dem Randbereichsabfall in gewissem Ausmaß entgegenwirkt. Insgesamt sollte daher die Beleuchtungsintensität mit einem vom Abstand zum Zentrum abhängigen Faktor k₁/k₂ modifiziert werden, um beide Effekte zu kompensieren.

Figur 4 zeigt eine Darstellung der Beleuchtungsvorrichtung 16. Als Lichtquelle 26 ist vorzugsweise eine Halbleiterlichtquelle vorgesehen. Je nach Ausführungsform handelt es sich um eine Laserdiode, eine LED oder ein Array derartiger Lichtquellen. Die Lichtquelle 26 kann zusätzlich eine nicht gezeigte Sendeoptik in Form beispielsweise von Linsen, Rückreflektoren beziehungsweise Blenden aufweisen, um das Licht zumindest grob in der mit einem Pfeil angedeuteten Hauptabstrahlrichtung 28 längs der optischen Achse abzustrahlen.

Die Beleuchtungsvorrichtung 16 weist einen umlaufenden seitlichen Reflektor 30 auf, der hier beispielhaft die Form eines innen verspiegelten Hohlkegels hat. Zusätzlich ist auf der optischen Achse ein Mittenreflektor 32 vorgesehen, der in der Schnittdarstellung dreieckig und räumlich betrachtet ein Keil oder ein Hohlkegel mit außen verspiegelter Mantelfläche ist. Dabei stimmen hier Symmetrieachse des Mittenreflektors 32 und optische Achse der Lichtquelle 26 überein, und die Spitze des Mittenreflektors 32 weist in die Gegenrichtung zu der Hauptabstrahlrichtung 28. Andere Ausführungsformen mit asymmetrischer Anordnung sind aber auch denkbar.

Der Mittenreflektor 32 lenkt zentrale Lichtanteile der Lichtquelle 28 zunächst auf den seitlichen Reflektor 30 und dann in den Randbereich des Beleuchtungs- oder Sichtbereichs 22 um. Der seitliche Reflektor 30 dient also dazu, einerseits die zweite Umlenkung der zentralen Lichtanteile wie durch zwei Pfeile 34a-b angedeutet nach außen und andererseits eine Umlenkung gänzlich peripherer Lichtanteile an den Randbereich sowie insgesamt äußerer Lichtanteile nach innen hin zu bewirken. Das führt auch dazu, dass die im direkten Lichtweg abgeschatteten zentralen Bereiche des Beleuchtungsbereichs 22 ausreichend beleuchtet werden. Durch geeignete Wahl der Winkel des seitlichen Reflektors 30, des Mittenreflektors 32 sowie der jeweiligen Größe und Anordnung lässt sich damit eine Intensitätsverteilung mit Randüberhöhung erzielen, wie sie beispielhaft mit durchgezogener Linie in Figur 3 illustriert ist.

Durch einen spitzen Winkel von höchstens 45°, vorzugsweise höchstens 30° oder höchstens 20° des Mittenreflektors 32 werden Mehrfachreflexionen zwischen seitlichem Reflektor 30 und Mittenreflektor 32 verhindert. Damit die Lichtumverteilung von außen nach innen durch den seitlichen Reflektor 30 tatsächlich eine ausreichende Beleuchtung des zentralen Bereichs bewirkt und die Randbereichsüberhöhung ein angemessenes Maß erhält, sollte der laterale Durchmesser des Mittenreflektors 32 deutlich kleiner bleiben als derjenige des seitlichen Reflektors 30, insbesondere höchstens halb so groß oder sogar höchstens ein Drittel oder ein Viertel betragen. Der Keil- beziehungsweise Kegelwinkel des Mittenreflektors entspricht vorzugsweise, aber nicht zwingend dem halben Öffnungswinkel des Beleuchtungs- beziehungsweise Sichtbereichs 22 der 3D-Kamera 10. Alternativ zu der gezeigten Ausführungsform des Mittenreflektors 32 mit dreieckigem Querschnitt sind auch parabolische Formen oder sogar Freiformflächen denkbar, wobei die jeweilige Form und Ausdehnung der Abstrahlcharakteristik der Lichtquelle 28 sowie der gewünschten Intensitätsverteilung angepasst ist. Dabei muss die Form nicht unbedingt rotationssymmetrisch sein, auch wenn dies vorzugsweise der Fall ist.

Die 3D-Kamera 10 weist eine Frontscheibe 36 zu deren Schutz auf, welche das Licht der Beleuchtungsvorrichtung 16 passiert. In diese Frontscheibe 36 können weitere optische Elemente integriert werden, um die gewünschte Umverteilung zu erreichen. Alternativ könnten auch nicht dargestellte zusätzliche optische Elemente in den Strahlengang der Beleuchtungsvorrichtung 16 eingebracht werden.

In einer Ausführungsform ist ein solches optisches Element in Form eines diffraktiven optischen Elements vorgesehen. Durch entsprechendes Design kann hier praktisch jede gewünschte Intensitätsverteilung und damit auch eine effektiv, also nach Berücksichtung von jeglichen Abbildungsfehlern des Empfangsobjektivs 14, homogene Ausleuchtung erreicht werden. Das optische Element wirkt dabei vorzugsweise mit dem seitlichen Reflektor 30 und dem Mittenreflektor 32 zusammen, könnte aber grundsätzlich auch allein für die gewünschte Umverteilung sorgen.

Sofern als Lichtquelle eine LED verwendet wird, würde man herkömmlich kein diffraktives optisches Element einsetzen, weil dessen Optimierung auf eine bestimmte Wellenlänge und Einfallsrichtung ausgelegt ist, die durch die Bandbreite und große Divergenz einer LED nicht eingehalten werden. Es gibt also parasitäre Beugungseffekte speziell in nullter Ordnung.

Der hier betrachteten homogenen Beleuchtung steht aber eine starke nullte Beugungsordnung nicht im Wege, da ohnehin nur ein Teil des Lichts nach außen umverteilt werden soll. Es genügt dafür, höhere Beugungsordnungen wie die ±1. Beugungsordnung zur Umverteilung nach außen zu verwenden. In Abhängigkeit von der Abstrahlcharakteristik der eingesetzten LED ist deshalb ohne Weiteres möglich, ein entsprechendes diffraktives optisches Element für eine homogene Ausleuchtung mit Randbereichsüberhöhung zu entwerfen.

Auch die Winkelabhängigkeit des diffraktiven optischen Elements kann dabei berücksichtigt beziehungsweise für die Auslegung vorteilhaft genutzt werden. Dazu erfolgt beispielsweise die Umverteilung hauptsächlich in der Mitte nahe der optischen Achse der LED, wo die Eingangsintensität hoch ist. Eine Verringerung der Umverteilungseffizienz mit zunehmendem Abstand von der optischen Achse ist hier sogar erwünscht, weil ja am Rande die Intensität erhöht und nicht durch Umverteilung weggenommen werden soll.

Eine Wellenlängendrift ist bei Lasern sehr problematisch und wird beispielsweise durch Temperaturkompensationen verhindert. Bei LEDs mit deren großer Bandbreite fällt eine Wellenlängendrift weniger ins Gewicht, da von Anfang an eine größere Toleranz gegenüber der Wellenlänge des einfallenden Lichts eingeplant wird. Man kann sogar von Anfang an die Designwellenlänge des diffraktiven optischen Elements gezielt abweichend von der LED-Wellenlänge wählen, da ohnehin keine maximale Beugungseffizienz verlangt wird. Das reduziert die Anfälligkeit gegenüber Wellenlängendrift noch weiter.

In einer speziellen Ausführungsform eines derartigen diffraktiven optischen Elements wird eine gechirpte Gitterstruktur eingesetzt, bei der die Gitterkonstante im Zentrum, also in der optischen Achse, maximal ist und dann zu beiden Seiten hin linear auf Null abfällt. Somit wird die maximale Intensität aus dem Zentrum an den Rand umverteilt. Je weiter man sich von der optischen Achse fortbewegt, desto kleiner wird die Gitterfrequenz beziehungsweise die Linienanzahl pro Millimeter, so dass der Umverteilungswinkel stetig abnimmt. Ab einem gewissen Abstand zum Zentrum, beispielsweise im halben Abstand zum Rand, ist dann gar keine Gitterstruktur mehr vorhanden, so dass in den Randbereichen auch keine Umverteilung mehr stattfindet.

In einer alternativen Ausführungsform ist anstelle eines diffraktiven optischen Elements eine Fresnellinse vorgesehen. Damit treten keine parasitären Beugungsordnungen auf, und auch die Effizienzproblematik besteht nicht in gleichem Maße. Insgesamt verringern sich die Freiheiten, damit aber auch der Aufwand für das Design. Gegenüber einer üblichen refraktiven Linse besteht der Vorteil einer Fresnellinse in deren flacher Bauform, die auch die einfache Integration in die Frontscheibe 36 erlaubt, insbesondere in deren Innenseite.

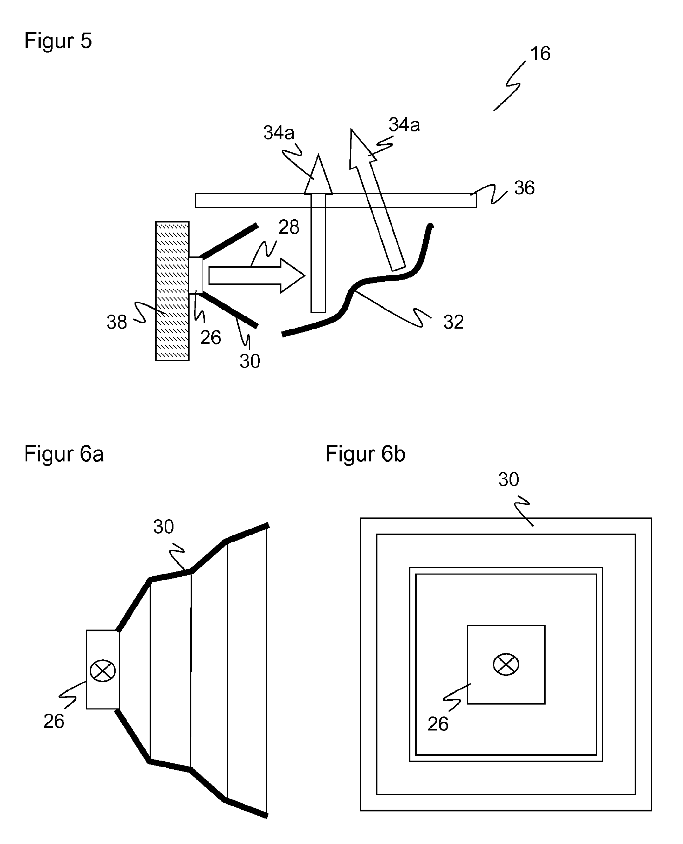

Figur 5 zeigt eine alternative Ausführungsform der Beleuchtungsvorrichtung 16. Der Mittenreflektor 32 ist hier in Form einer seitlich angestrahlten Spiegelkontur ausgeführt, die nicht von vorne, sondern im Wesentlichen im Winkel von 45° angestrahlt wird. Dadurch verändert sich auch die Gesamtanordnung und Orientierung, denn die Lichtquelle 26 ist nunmehr um 90° verkippt. Durch die Spiegelkontur können praktisch beliebige Intensitätsverteilungen erzielt werden. Ein zusätzlicher Vorteil dieser Anordnung besteht darin, dass die mindestens eine Lichtquelle 26 an einer seitlichen Gehäusewand 38 angebracht werden kann, was die thermische Anbindung und das Abführen von Verlustwärme vereinfacht.

Figur 6a zeigt in einer Seitenansicht und Figur 6b in einer Draufsicht eine alternative Ausführungsform des seitlichen Reflektors 30. Dabei sind mindestens zwei, in dem konkret dargestellten Beispiel vier Pyramidenstümpfe, genaugenommen Hohlpyramidenstümpfe übereinander gestapelt. Durch die unterschiedlichen Winkel und Höhen der Pyramidenstümpfe ergeben sich Anpassungsfreiheitsgrade an die Abstrahlcharakteristik der Lichtquelle 26 und die gewünschte Beleuchtungsverteilung in dem Beleuchtungsbereich 22. Ein Mittenreflektor 32 ist der vereinfachten Darstellung halber in Figur 6 nicht gezeigt, jedoch vorzugsweise analog der Figur 4 vorgesehen. Andererseits ist in einer weiteren Ausführungsform auch denkbar, auf den Mittenreflektor 32 zu verzichten, besonders für Lichtquellen 26 mit großem Abstrahlwinkelbereich.

## Patentansprüche

1. Beleuchtungsvorrichtung (16) für eine 3D-Kamera (10) zur Erzeugung eines Beleuchtungsbereichs (22) mit homogener, jedoch in Randbereichen des Beleuchtungsbereichs (22) überhöhter Intensitätsverteilung, wobei die Beleuchtungsvorrichtung (16) mindestens eine Lichtquelle (26) mit einer Hauptabstrahlrichtung sowie einen um die Hauptstrahlrichtung (28) umlaufenden seitlichen Reflektor (30) aufweist,
**dadurch gekennzeichnet,**
**dass** der seitliche Reflektor (30) die Form mindestens zweier übereinander angeordneter Hohlkegel- oder Hohlpyramidenstümpfe aufweist.

2. Beleuchtungsvorrichtung (16) nach Anspruch 1,wobei der seitliche Reflektor (30) vier übereinander gestapelte Hohlpyramidenstümpfe aufweist.

3. Beleuchtungsvorrichtung (16) nach Anspruch 1 oder 2,
wobei die Hohlpyramidenstümpfe unterschiedliche Winkel und Höhen zur Anpassung an eine Abstrahlcharakteristik der Lichtquelle und gewünschte Beleuchtungsverteilung in dem Beleuchtungsbereich (22) aufweisen.

4. Beleuchtungsvorrichtung (16) nach einem der vorhergehenden Ansprüche, wobei in der Hauptabstrahlrichtung (28) kein Mittenreflektor (32) angeordnet ist und insbesondere die Lichtquelle (26) einen großen Abstrahlwinkel aufweist.

5. Beleuchtungsvorrichtung (16) nach einem der vorhergehenden Ansprüche, wobei die Lichtquelle (26) eine LED oder ein LED-Array aufweist.

6. 3D-Kamera (10) mit mindestens einer Beleuchtungsvorrichtung (16) nach einem der vorhergehenden Ansprüche.

7. 3D-Kamera (10) nach Anspruch 6, die als 3D-Kamera (10) nach dem Lichtlaufzeitprinzip ausgebildet ist und einen Bildsensor (12) mit einer Vielzahl von Pixelelementen sowie eine Auswertungseinheit (18) aufweist, um für jedes Pixelelement eine Lichtlaufzeit zwischen Aussenden und Empfang von Licht der Beleuchtungsvorrichtung (16) zu bestimmen.

8. Verfahren zur Erzeugung eines Beleuchtungsbereichs (22) für eine 3D-Kamera (10) mit homogener, jedoch in Randbereichen des Beleuchtungsbereichs (22) überhöhter Intensitätsverteilung, wobei äußere Anteile von Licht, das von einer Lichtquelle (26) in einer Hauptabstrahlrichtung (28) abgestrahlt wird, an einem um die Hauptstrahlrichtung (28) umlaufenden seitlichen Reflektor (30) umverteilt werden,
**dadurch gekennzeichnet, dass** Licht an einem seitlichen Reflektor (30) in Form mindestens zweier übereinander angeordneter Hohlkegel- oder Hohlpyramidenstümpfe umverteilt wird.
